# EUROPÄISCHE PATENTSCHRIFT

(11) **EP 1 123 642 B1**
(45) Veröffentlichungstag und Bekanntmachung des Hinweises auf die Patenterteilung: **13.09.2006**
(21) Anmeldenummer: 99938169.2
(22) Anmeldetag: 11.06.1999
(51) Int. Cl.: H05H 1/54

(54) **PLASMABESCHLEUNIGER-ANORDNUNG**
PLASMA ACCELERATOR ARRANGEMENT
DISPOSITIF ACCELERATEUR A PLASMA

(30) Priorität: 26.06.1998 DE 19828704
(43) Veröffentlichungstag der Anmeldung: 16.08.2001
(73) Patentinhaber: Thales Electron Devices GmbH, 89077 Ulm (DE)
(72) Erfinder: KORNFELD, Günter, D-89275 Elchingen (DE); WEGENER, Jürgen, D-89081 Ulm (DE); SEIDEL, Harald, D-88483 Burgrieden (DE)
(74) Vertreter: Weber, Gerhard
(86) Internationale Anmeldenummer: PCT/DE1999/001708
(87) Internationale Veröffentlichungsnummer: WO 2000/001206

(56) Entgegenhaltungen:
- DE-B- 1 222 589
- PATENT ABSTRACTS OF JAPAN vol. 017, no. 009 (E-1303), 8. Januar 1993 (1993-01-08) & JP 04 242046 A (MITSUBISHI ELECTRIC CORP), 28. August 1992 (1992-08-28)
- PATENT ABSTRACTS OF JAPAN vol. 1997, no. 12, 25. Dezember 1997 (1997-12-25) & JP 09 223474 A (SUMITOMO HEAVY IND LTD), 26. August 1997 (1997-08-26)

## Beschreibung

Die Erfindung betrifft eine Plasmabeschleuniger-Anordnung. Plasmabeschleuniger (ion thrusters, electric propulsion systems EPS) sind von erheblicher Bedeutung als Antriebe in Weltraumflugkörpem sowohl für erdnahe und geostationäre Satelliten als auch für Raummissionen außerhalb eines Erdorbits. Das Verhältnis von Antriebsimpuls zu eingesetzter Treibstoffmasse als ein Maß für den Wirkungsgrad des Antriebs ist für Plasmabeschleuniger wesentlich günstiger als für konventionelle chemische Antriebe, so daß sich eine für Weltraumanwendungen besonders wichtige Verringerung des Gewichtsanteils des Treibstoffs ergibt. Als Treibstoff wird häufig ein Edelgas mit hohem Atomgewicht, insbesondere Xenon eingesetzt.

Bei Gitter-Ionentriebwerken, z. B. US 4838021, wird in einer Ionisationskammer aus neutralem Gas durch Hochfrequenz oder Elektronenbeschuß ein Plasma erzeugt. Die positiv geladenen Ionen werden in einem angelegten elektrischen Feld in Richtung einer Gitterelektrode in Ausstoßrichtung beschleunigt. Dem beschleunigten Ionenstrom muß zur elektrischen Neutralisation ein Strom freier Elektronen zugefügt werden. Der neutralisierte Plasmastrom tritt mit hoher Geschwindigkeit aus dem Triebwerk aus und beschleunigt den Flugkörper in entgegengesetzter Richtung. Durch Raumladungseffekte ist die Ionenstromdichte beschränkt und die Triebwerke dieser Bauart benötigen große Querschnitte bei nur mäßigem Rückstoßimpuls.

Bei Ionentriebwerken nach dem Hallprinzip, z. B. EP 541309 A1, ist eine ringförmige Ionisationskammer von einem zur Ringachse parallelen elektrischen Beschleunigungsfeld und einem radialen Magnetfeld durchsetzt. Von einer externen Elektronenquelle werden entgegen der lonenausstoßrichtung Elektronen in die neutrales Gas enthaltende Ionisationskammer geleitet, wo sie aufgrund des Magnetfelds auf Spiralbahnen gezwungen werden und so die Laufstrecke innerhalb der Ionisationskammer gegenüber dem direkten Weg zur Anode vervielfacht und dadurch auch ionisierende Wechselwirkung mit dem Treibstoffgas gesteigert wird. Von der magnetischen Ablenkung sind auch Sekundärelektroden betroffen, die in dem elektrischen Feld beschleunigt werden. Die gegebene Feldkonfiguration vermeidet femer weitgehend die Ausbildung von Raumladungszonen, welche eine Abschirmung des elektrischen Beschleunigungsfelds für die positiven Treibstoffionen bewirken könnten. Die Beschleunigung der positiven Ionen erfolgt daher in einem weitgehend neutralen Plasma. Eine solche Anordnung erlaubt deutlich höhere Stromdichten als eine Gitter-Ionentriebwerksanordnung, zeigt aber durch eine große Winkelaufweitung des ausgestossenen Ionenstroms einen nur mäßigen Wirkungsgrad.

In der DE 1222589 B ist eine Vorrichtung zur Erzeugung eines raumladungsneutralisierten Strahles geladener Teilchen beschrieben, bei welcher ein Strahl hoch beschleunigter Elektronen in eine Ionisationskammer entlang deren Längsachse eingeleitet und durch ein zur Längsachse paralleles Magnetfeld geführt ist. Eine Bogenentladung in der Ionisationskammer erzeugt aus eingeleitetem Gas langsame Elektronen und positiv geladene Ionen. Während letztere in Richtung des primären Elektronenstrahls durch eine Ionenbeschleunigungselektrode beschleunigt werden und zusammen mit abgebremsten Elektronen des primären Elektronenstrahls die lonisationskammer als neutraler Plasmastrahl verlassen, pendeln die langsamen Elektronen der Gasentladung, geführt durch das zur Längsachse parallele Magnetfeld, zwischen eingangs- und ausgangsseitigen Elektroden. Die beschleunigten Ionen und die abgebremsten Elektronen des Elektronenstrahls verlassen die Anordnung als neutraler Plasmastrahl.

Der vorliegenden Erfindung liegt die Aufgabe zugrunde, eine Plasmabeschleuniger-Anordnung, insbesondere als Ionentriebwerk in Raumflugkörpern, mit verbessertem Wirkungsgrad anzugeben.

Die Erfindung ist im Patentanspruch 1 beschrieben. Die Unteransprüche enthalten vorteilhafte Ausgestaltungen und Weiterbildungen der Erfindung.

Bei der erfindungsgemäßen Anordnung setzt der in die Ionisationskammer eingeleitete gebündelte Elektronenstrahl anfänglich die Ionisation des in der Ionisationskammer befindlichen und/oder in diese eingeleiteten neutralen Treibstoffgases in Gang. Die bei der Ionisation freigesetzten Sekundärelektronen werden in dem zur Beschleunigung der positiven Ionen vorgesehenen elektrischen Feld in Gegenrichtung beschleunigt und wirken selbst wieder ionisierend.

Nach Initiierung des Ionisationsprozesses durch den Elektronenstrahl können die Sekundärelektronen den Hauptteil der weiteren Ionisation übernehmen.

Ein weiterer wichtiger Effekt des eingeleiteten Elektronenstrahls ist die Begünstigung der Fokussierung eines im elektrischen Beschleunigungsfeld beschleunigten lonenstrahls durch Kompensation der positiven Raumladung des lonenstroms durch die negative Raumladung des Elektronenstrahls, so daß keine Abschirmung des beschleunigenden elektrischen Felds erfolgt. Das Beschleunigungsfeld für die positiven Ionen wirkt für die Elektronen des in gleicher Richtung wie der des beschleunigten Ionenstroms laufenden Elektronenstrahls verzögernd, so daß die Raumladungsdichte des Elektronenstrahls in Richtung der Längsachse der lonisationskammer zunimmt, was vorteilhaft korrespondiert mit der insbesondere im Endabschnitt der lonisationskammer angestrebten Bündelung des lonenstrahls. Vorzugsweise sind mittlere Geschwindigkeit der Elektronen des Elektronenstrahls und Potentialgefälle des Beschleunigungsfelds für die Ionen, was einer Potentialsteigerung für die Elektronen entspricht, so aufeinander abgestimmt, daß am Ende der Beschleunigungsstrecke für die Ionen (bzw. Verzögerungsstrecke für die Elektronen des Elektronenstrahls) die mittleren Geschwindigkeiten von Elektronen des Elektronenstrahls und Ionen des beschleunigten Ionenstroms annähernd gleich sind, so daß ein annähernd neutrales Plasma am Ende der Beschleunigungsstrecke austritt. Die mittleren Geschwindigkeiten unterscheiden sich vorzugsweise um weniger als den Faktor 10.

Der Elektronenstrahl wirkt über die gesamte Länge der Ionisationskammer durch seine negative Raumladung auch als zentraler Attraktor für die positiven Ionen und unterstützt die Fokusierung der beschleunigten Ionen in einen gebündelten Elektronenstrom und kompensiert gleichzeitig die gegenseitige Abstoßung der Ionen. Einer Aufweitung des Elektronenstrahls kann durch ein Strahlführungs- und/oder Strahlfokusierungssystem aus magnetischen und/oder elektrischen Feldern entgegengewirkt werden. Vorteilhaft ist insbesondere ein magnetisches Strahlführungssystem mit im Strahlbereich zur Strahlrichtung und zur Längsachse der Ionisationskammer im wesentlichen parallelem Feldverlauf. Elektronen des Elektronenstrahls mit einer Bewegungskomponente senkrecht zur Längsachse werden durch das Magnetfeld auf eine Spiralbahn um die Strahlachse gezwungen. Magnetische Strahlführungssysteme sind an sich von Elektronenstrahlröhren in vielfältiger Weise und insbesondere bei Wanderfeldröhren in Form von permanentperiodischen Magnetanordnungen mit entlang der zentralen Achse auftretenden Feldrichtungsumkehrungen, an welchen das Feld auch starke radiale Komponenten aufweist, bekannt. Auf solche bekannten Strahlführungssysteme wird auch zum Zwecke der Offenbarung verwiesen. Wanderfeldröhren mit derartigen Magnetanordnungen sind bespielsweise aus der DE 2652020 B2 oder der DE-AS-1491516 bekannt.

Ein magnetisches Feldsystem ist auch vorteilhaft geeignet, die in dem elektrischen Beschleunigungsfeld für die positiven Ionen in entgegengesetzter Richtung beschleunigten langsamen Sekundärelektronen aus den Ionisationsprozessen auf spiralförmige oder ähnliche gekrümmte Bahnen zu zwingen. Hierdurch wird zum einen ein schnelles Auftreffen der Elektronen auf eine der entgegen der Längsachse der lonisationskammer folgende Elektrode vermieden und die Wahrscheinlichkeit, daß ein Sekundärelektron einen oder mehrere weitere Ionisationsprozesse auslöst, deutlich erhöht, so daß die Ionisation des Treibstoffgases primär durch die Sekundärelektronen erfolgen kann. Zum anderen wird durch den längeren Aufenthalt der Sekundärelektronen die bei der Ionisation entstehende positive Raumladung der langsamen Ionen teilweise kompensiert. Schließlich können die Elektronen durch das Magnetfeld auch weitgehend innerhalb der jeweiligen Potentialstufe gehalten und schließlich auf die entgegen der Längsrichtung nächste Elektrode geleitet werden, so daß größere Energieverluste durch über weitere Strecken beschleunigte Sekundärelektronen vermieden werden. Die Umlenkung der Sekundärlektronen auf gekrümmte Bahnen um die Richtung des auf die Elektronen beschleunigend wirkenden Feldes ist besonders wirkungsvoll, wenn die Feldrichtungen des elektrischen und magnetischen Feldes senkrecht aufeinanderstehen. Vorteilhafterweise sind daher die elektrischen und magnetischen Felder so ausgebildet, daß sich die Feldlinien im überwiegenden Teil, insbesondere mehr als 90% des Volumens der Ionisationskammer kreuzen. Vorzugsweise liegt der zwischen elektrischer und magnetischer Feldrichtung eingeschlossene Winkel in wenigstens 50% des Volumens der Ionisationskammer zwischen 45° und 135°. Sowohl magnetisches als auch elektrisches Feld zeigen dabei deutlich bis überwiegend Feldkomponenten parallel zur Längsachse und die mittleren Feldrichtungen von elektrischem und magnetischem Feld liegen bevorzugt zusammenfallend auf der Längsachse der Ionisationskammer. Bei einem Magnetfeld mit Feldrichtungswechseln entlang der Längsachse ist hierbei die mittlere Feldrichtung ohne Beachtung der Polarität zu verstehen.

Eine vorteilhafte Anordnung hierfür sieht eine Feldkonfiguration vor, bei welcher Elektroden zur Erzeugung des elektrischen Felds und Pole des magnetischen Felds in Richtung der Längsachse abwechselnd aufeinanderfolgen und vorzugsweise Elektroden und/oder Polschuhe an der seitlichen Wand der lonisationskammer angeordnet sind. Die Felder sind bevorzugt drehsymmetrisch oder rotationsymmetrisch bezüglich der Längsachse und zeigen Maxima und Minima ihrer Feldstärken auf der Längsachse. Im einfachsten einstufigen Aufbau sind zwei Elektroden in Längsrichtung der Ionisationskammer beabstandet und drei die Ionisationskammer umgebende Polschuhe sind gleichfalls voneinander in Längsrichtung beabstandet und mit wechselnder Polarität so angeordnet, daß je zwei Polschuhe je eine der beiden Elektronen zwischen sich einschließen. In Längsrichtung liegen die Elektroden jeweils zumindest annähernd bei Maxima der magnetischen Feldstärke auf der Längsachse und das Minimum der magnetischen Feldstärke auf der Längsachse am Ort der Feldrichtungsumkehr fällt zumindest annähernd mit dem Maximum des elektrischen Felds in Längsachsenrichtung zusammen.

Besonders vorteilhaft ist eine mehrstufige Anordnung bei welcher das magnetische Feld auf der Längsachse mehrere Feldrichtungsumkehrungen aufweist und die die Ionisationskammer ringförmig umgebenden Polschuhe mit alternierender Polarität in Längsrichtung aufeinanderfolgen und jeweils zwischen zwei Elektroden der elektrischen Elektronenanordnung eingefügt sind. Die mehreren Elektroden bilden Potentialstufen. Das elektrische Feld zeigt aber im Unterschied zum magnetischen Feld keine Feldrichtungsumkehr auf der Längsachse. Das elektrische Potential ändert sich in Längsrichtung der lonisationskammer von Stufe zu Stufe monoton. Außerhalb der Längsachse verlaufen die Felder der beiden Feldarten gekreuzt zueinander, wobei vorzugsweise in wenigstens 60% des Volumens der von den sich kreuzenden Feldrichtungen eingeschlossene Winkel zwischen 45° und 135° liegt.

Vorteilhafterweise können die elektrischen und magnetischen Felder so aufeinander abgestimmt sein, daß ein im Bereich einer elektrischen Potentialstufe zwischen zwei unmittelbar benachbarten Elektroden durch Ionisation erzeugtes Sekundärelektron durch das Magnetfeld möglichst innerhalb dieser Stufe gehalten und evtl. nach Bewirkung eines oder mehrerer weiterer lonisationsprozesse auf die entgegen der Längsrichtung nächste Elektrode geleitet wird.

Während die Elektronen aufgrund ihrer geringen Masse einem starken Magnetfeldeinfluß unterliegen, ist die Bewegung der Ionen im wesentlichen nur durch die elektrischen Felder bestimmt. Die Ionen werden in Richtung des Potentialgefälles beschleunigt und zur Längsachse hin konzentriert, wobei diese Bündelung auch durch die zwischen benachbarten Elektroden entstehenden Feldlinien maßgeblich mitbewirkt wird. Die Ionen können daher aus dem elektrischen Feld im Mittel Energie aus mehreren Potentialstufen aufnehmen, wogegen die Energieverluste durch die von den Elektroden eingefangenen Sekundärelektronen aufgrund der Einschränkung deren Bewegung auf eine oder zwei Potentialstufen gering bleiben, so daß sich ein hoher Wirkungsgrad bei der Umsetzung elektrischer Energie in mechanische Energie ergibt.

Die vorzugsweise ringförmigen Elektroden, insbesondere die zwischen zwei weiteren Elektroden eingeschlossenen Zwischenelektroden einer mehrstufigen Anordnung sind für ein zuverlässiges Einfangen von Sekundärelektronen vorteilhafterweise in Längsrichtung flächig ausgedehnt, wobei die Länge der Zwischenelektroden in Richtung der Längsachse vorzugsweise mindestens 30%, insbesondere mindestens 80% des Abstands zur jeweils nächsten Elektrode beträgt.

Zur Erzielung der beschriebenen Feldeigenschaften mit Beschränkung der Bewegung der Sekundärelektroden und Fokusierung der positiven Ionen durch Feldlinsen beträgt der Durchmesser einer Zwischenelektrode vorzugsweise weniger als 300%, insbesondere weniger als 100% der Elektrodenlänge in Längsachsenrichtung.

Die Erzeugung eines gebündelten Elektronenstrahls in Form eines Zentralstrahls oder eines Hohlstrahls ist aus der Technologie der Kathodenstrahlröhren in vielen Variationen bekannt, so daß auf Details hierzu an dieser Stelle verzichtet und auf Anordnungen aus dem Stand der Technik z. B. DE 1222589 B oder DE 2931746 C2 verwiesen wird. Für die Erfindung wird beispielsweise mittels einer Elektronenoptik vom Pierce-Typ ein von einer Kathode gelöster Elektronenstrom in einen laminaren Strahl gebündelt und in die Ionisationskammer entlang der Längsachse eingeleitet. Der Eintrittsbereich des Elektronenstrahls in die Ionisationskammern ist vorteilhafterweise als Barriere für in der lonisationskammer erzeugte Ionen ausgebildet, um zu verhindern, daß durch Durchgriff des Kathodenpotentials in die lonisationskammer Ionen auf die Kathode gelenkt und elektrische Verluste oder gar eine Degradation des Elektronenemissionsvermögens der Kathode verursachen können, oder um einen solchen unerwünschten Ionenstrom zumindest gering zu halten. Als Ionenbarriere kann beispielsweise die erste Elektrode als Ringblende mit gegenüber dem Durchmesser der Ionisationskammer geringem Lochblendendurchmesser ausgeführt sein. Innerhalb der Ionisationskammer wird der Strahl durch das beschriebene Magnetfeld als gebündelter Strahl geführt.

Die Primärelektronen des gebündelten Elektronenstrahls werden in der zur Beschleunigung der Ionen ausgebildeten Potentialdifferenz innerhalb der Beschleunigungsstrecke zwischen der ersten und der letzten Elektrode der vorzugsweise mehrstufigen Elektrodenanordnung, die bevorzugt im wesentlichen mit der Ionisationskammer identisch ist, verzögert. Ohne zusätzliche Energieverluste erreichen die Elektronen das Ende der Verzögerungsstrecke mit einer Restgeschwindigkeit, die sehr viel kleiner sein soll als die Geschwindigkeit am Beginn der Beschleunigungsstrecke (Verzögerungsstrecke für die Elektronen). Die Spannung der letzten Elektrode ist hierfür vorteilhafterweise geringfügig positiv gegen die Kathode. Ohne Treibstoffgas in der Ionisationskammer können die Elektronen am Ende der Beschleunigungsstrecke mit geringer Restenergie von der dann als Kollektor wirkenden letzten Elektrode aufgefangen werden.

Im Realfall mit Treibstoffgas in der Ionisationskammer geben einige der Primärelektronen auf dem Weg durch die lonisationskammer Energie durch Wechselwirkung mit dem Treibstoffgas, insbesondere durch Anregung und Ionisation von Treibstoffgas ab und verlieren an Geschwindigkeit. Der hierauf beruhende Geschwindigkeitsverlust ist aber typischerweise sehr klein gegenüber der Anfangsgeschwindigkeit und kann bei der Einstellung des Potentials der letzten Elektrode zur Erzielung eines neutralen Plasmas im austretenden Plasmastrahl berücksichtigt, insbesondere empirisch bestimmt werden.

Die Zuführung des Treibstoffgases erfolgt bevorzugt durch seitliche Wandöffnungen der Ionisationskammer in einem Bereich, der sowohl von der Eintrittsseite des Elektronenstrahls als auch von der Austrittsseite des Plasmastrahls beabstandet ist. Vorzugsweise ist der Zuführungsbereich in einem Abstand zwischen 10% und 40% der Länge der Ionisationskammer in Längsrichtung vom Elektronenstrahleintritt entfernt.

Die vorstehend und in den Ansprüchen angegebenen Merkmale sind sowohl einzeln als auch in Kombinationen vorteilhaft realisierbar.

Die Erfindung ist nachfolgend anhand von Ausführungsbeispielen unter Bezugnahme auf die Abbildungen noch eingehend veranschaulicht. Dabei zeigt:
- Fig. 1: einen Längsschnitt durch einen mehrstufigen Aufbau
- Fig. 2: Feldverläufe für eine mehrstufige Anordnung
- Fig. 3: Feldverläufe für eine einstufige Anordnung

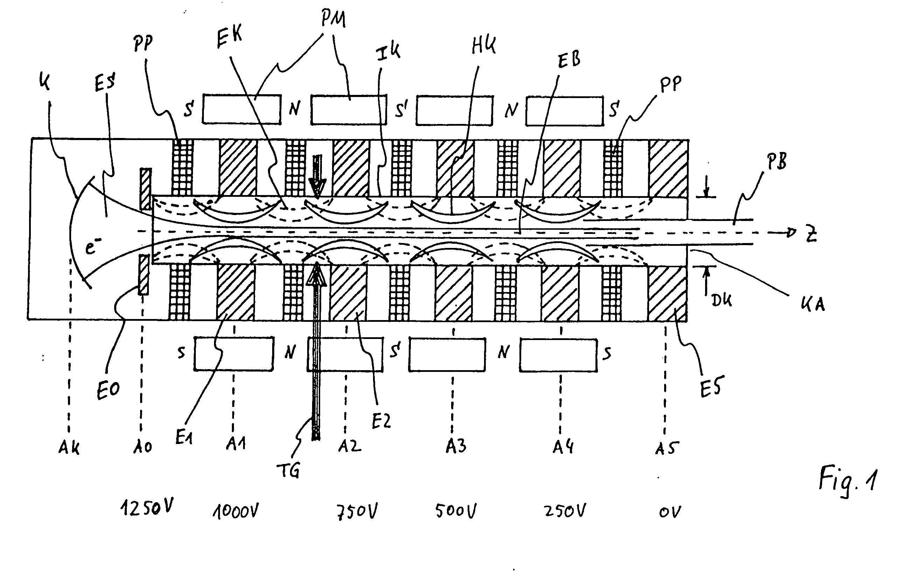

Die in Fig. 1 als Längsschnitt entlang einer Längsachse Z skizzierte Anordnung weist um die Längsachse Z eine Ionisationskammer IK auf, die beispielsweise rotationssymmetrisch um die Längsachse Z aufgebaut ist. Die Längsausdehnung der Ionisationskammer IK in Richtung der Längsachse Z sei wesentlich größer als der Durchmesser DK der Ionisationskammer senkrecht zur Längsachse Z. Die Ionisationskammer IK sei durch eine zylindrische Seitenwand quer zur Längsachse abgegrenzt.

Entlang der Seitenwand sind Magnetpolschuhe PP und Elektroden E1, E2 bis E5 angeordnet, wobei die Polschuhe und die Elektroden zumindest an ihren zur zentralen Längsachse Z hinweisenden Seiten rotationssymmetrisch ausgebildet sind. Die Magnetpolschuhe PP lenken den in von der Ionisationskammer IK radial beabstandet angeordneten Permanentmagneten PM erzeugten magnetischen Fluß in radialer Richtung um, so daß jeder Polschuh PP einen magnetischen Pol bildet, wobei in Längsrichtung unmittelbar aufeinanderfolgende Polschuhe Magnetpole entgegengesetzter Polarität bilden. Das sich in der Ionisationskammer IK zwischen den Polschuhen ausbildende magnetische Feld zeigt daher an der Stelle jedes Polschuhs PP eine Feldrichtungsumkehr. Eine solche Magnetfeldanordnung ist an sich als permanentperiodisches Magnetsystem aus der Technologie der Wanderfeldröhren hinreichend bekannt.

Die zwischen den Polschuhen PP angeordneten Elektroden E1 bis E5 liegen auf verschiedenen Potentialen A1, A2 bis A5. Die Elektrodenanordnung wird ergänzt durch eine Kathode K und eine Anode E0. Die Kathode K und die Anode E0 bilden ein Strahlerzeugungssystem zur Erzeugung eines gebündelten Elektronenstrahls EB aus einem laminaren Elektrodenstrom ES. Strahlsysteme zur Erzeugung und Fokusierung eines Elektronenstrahls sind gleichfalls aus dem Stand der Technik in vielfacher Ausführung bekannt. Die Anodenelektrode E0 bildet zusammen mit den die lonisationskammer seitlich begrenzenden Elektroden E1 bis En eine Elektrodenanordnung mit einem für Ionen monotonen Potentialgefälle vom Potential A0 der Anodenelektrode E0 bis zum Potential A5 der Elektrode E5 mit A0 > A1 > A2 > A3 > A4 > A5 für positiv geladene Ionen. Für die negativ geladenen Elektronen des Elektronenstrahls EB bildet die Potentialreihe A0 bis A5 ein Bremspotential, welches die Anfangsgeschwindigkeit der Elektronen des Elektronenstrahls EB beim Fortschreiten entlang der Längsachse Z stetig verringert.

Die Spannung der Kathode K wird gegenüber der letzten Elektrode E5 leicht negativ gewählt, so daß die Elektronen des Elektronenstrahls EB nach Durchlaufen der Ionisationskammer bis zur Elektrode E5 noch eine geringe Restgeschwindigkeit besitzen. Der Elektronenstrahl EB wird in der lonisationskammer durch das zwischen den Polschuhen aufgebaute Magnetfeld HK als gebündelter Strahl geführt.

Der lonisationskammer wird durch die Seitenwand neutrales Treibstoffgas TG zugeführt. Die Elektronen des Elektronenstrahls EB treten mit dem neutralen Treibstoffgas in Wechselwirkung und bewirken eine teilweise Ionisation des Gases. Die dabei entstehenden positiv geladenen Ionen werden in Richtung des Potentialgefälles von A0 nach A5 beschleunigt und dabei von dem gebündelten Elektronenstrahl EB sowie den durch die aufeinanderfolgenden Elektroden gebildeten Feldlinsen zur Längsachse Z hin gebündelt. Die bei der Ionisation freiwerdenden Sekundärelektronen haben zu Beginn eine sehr geringe Geschwindigkeit in statistisch variierender Richtung. Die Sekundärelektronen werden in dem elektrischen Feld EK zwischen den einzelnen Elektroden beschleunigt, wobei die Richtung der Beschleunigung der Beschleunigungsrichtung der Ionen entgegengerichtet ist. Die beschleunigten Sekundärelektronen werden durch das zugleich in der Ionisationskammer IK vorliegende Magnetfeld HK umgelenkt und auf gekrümmte Bahnen um die Richtung des beschleunigenden elektrischen Felds gezwungen. Hierdurch wird die Aufenthaltsdauer der Elektronen in einer Stufe zwischen zwei Elektroden erheblich verlängert und die Wahrscheinlichkeit, daß ein solches Sekundärelektron einen weiteren lonisationsprozeß auslöst, wird stark erhöht. Die Sekundärelektronen werden schließlich von einer der in Richtung der Anode E0 folgenden Elektroden eingefangen. Die längere Verweildauer der Elektronen in der Ionisationskammer zwischen zwei Elektronen bis zum Auftreffen auf eine Elektrode trägt auch dazu bei, daß der schnelle Aufbau einer positiven Raumladung durch die positiv geladenen Ionen und somit eine Abschirmung des die Ionen beschleunigenden Feldes vermieden wird.

Die Ionisation von Treibstoffgas TG sowohl durch die Primärelektronen des Elektronenstrahls EB als auch durch Sekundärelektronen aus vorangegangenen Ionisationsprozessen verteilt sich im wesentlichen über die gesamte Länge der Ionisationskammer. Die entlang des Potentialgefälles zwischen A0 und A5 in Richtung der Längsachse Z beschleunigten und um die Längsachse Z gebündelten Ionen bilden am Ausgang KA der Ionisationskammer zusammen mit den verzögerten Elektronen des gebündelten Elektronenstrahls EB einen weitgehend neutralen Plasmastrahl PB mit nur geringer Strahldivergenz.

Die Anodenelektrode E0 ist zugleich als Elektronenbarriere ausgebildet und weist die Form einer Blendenelektrode mit einer gegenüber dem Durchmesser DK der lonisationskammer kleinen Durchmesser der Blendenöffnung auf. In der Fig. 1 sind als Beispielswerte für die Potentialschritte die auf die letzte Elektrode E5 bezogenen Spannungen der Elektroden E0 bis E4 eingetragen. Die Spannung der Kathode K ist gegenüber der letzten Elektrode E5 leicht negativ. Die Pole der Magnetanordnung sind in gebräuchlicher Weise mit S und N unterschieden.

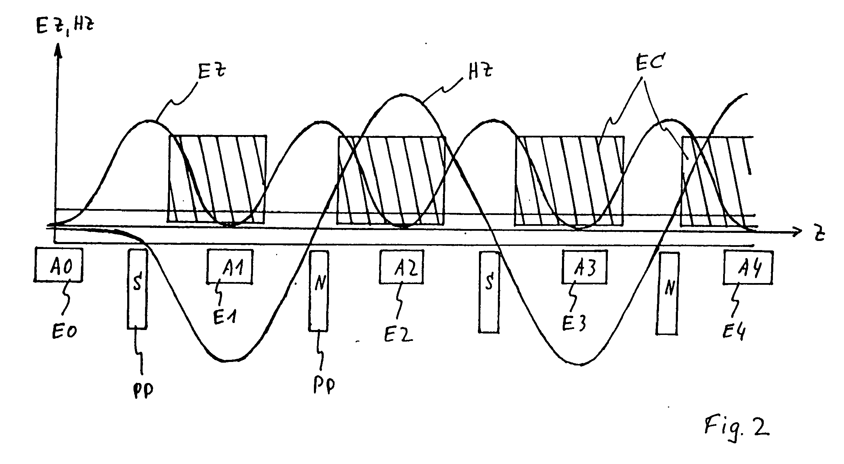

Die Fig. 2 zeigt qualitativ den Feldverlauf und die Elektronenladungsverleitung entlang der Längsachse Z für einen Ausschnitt aus der Struktur nach Fig. 1. In der Darstellung der Fig. 2 sind neben den Feldverläufen und Ladungsverteilungen der Elektronen auch noch die Elektroden E0, E1, ... sowie die Polschuhe PP andeutungsweise an ihren Positionen entlang der Z-Achse eingezeichnet. Der Primärelektronenstrahl EB ist symmetrisch zu beiden Seiten der Längsachse Z eingetragen, wogegen die Häufungen EC der Sekundärelektronen der Übersichtlichkeit halber lediglich auf einer Seite der Längsachse Z eingetragen sind. Mit Ez und Hz sind die Feldstärken auf der Längsachse bzw. deren unmittelbarer Umgebung eingetragen. Die Längsachse Z bildet die Abszisse der Darstellung und die Ordinate gibt die Feldstärke Ez bzw. Hz Qualitativ an. Das elektrische Feld Ez auf der Längsachse ist an den Positionen der Elektroden E0, E1, ... minimal und in der Mitte zwischen den Elektroden maximal. Es findet dabei keine Richtungsumkehr des Feldes statt, so daß die elektrische Feldstärke in der Darstellung das Vorzeichen nicht ändert. Die Magnetfeldstärke in Z-Richtung auf der Längsachse zeigt Minima an den Orten der Polschuhe PP und Maxima zwischen zwei benachbarten Polschuhen. Im Unterschied zum elektrischen Feld tritt für das magnetische Feld an den einzelnen Polschuhen jeweils eine Feldrichtungsumkehr auf, welche sich in der Skizze als ein Durchgang durch die als Nullinie gedachte Längsachse Z darstellt und als Vorzeichenwechsel behandelt werden kann. Die bei Ionisationsprozessen entstehenden Sekundärelektronen werden durch das elektrische Feld in der Ionisationskammer beschleunigt und durch das magnetische Feld auf gekrümmte Bahnen gezwungen. Es tritt eine Häufung von Elektronen, d.h. eine erhöhte Konzentration von Elektronen in ringförmigen Bereichen EC um die Längsachse Z auf, welche bezüglich der Längsrichtung ungefähr bei den Minima des elektrischen bzw. Maxima des magnetischen Feldes liegen.

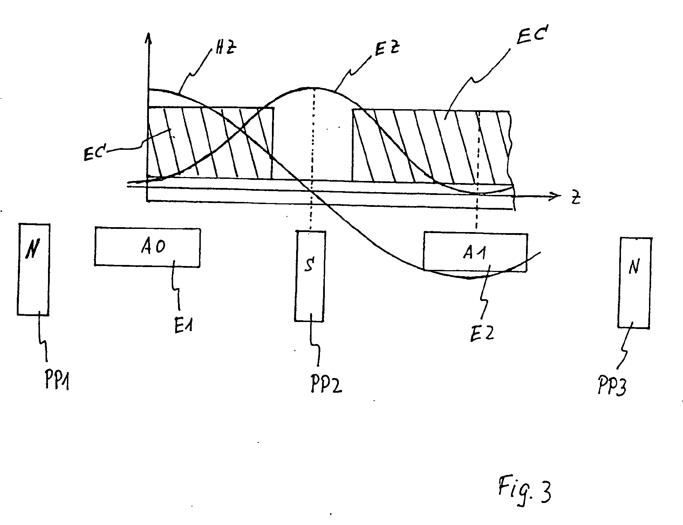

Die Fig. 3 zeigt in vergleichbarer Darstellung wie in Fig. 2 Feldverläufe und Elektronenverteilungen für eine einstufige mit zwei Elektroden E1, E2 auf Potentialen A0 bzw. A1 sowie mit einer Magnetanordnung mit drei Polschuhen PP1, PP2 und PP3, von denen jeweils zwei je eine der beiden Elektroden E1 bzw. E2 einschließen. Die Feldanordnung einer solchen Einzelstufe zeigt ähnlich zu der in Fig. 2 skizzierten Verteilung Minima der elektrischen Feldstärke auf der Achse an den Orten der Elektroden E1, E2 sowie ein Maximum der elektrischen Feldstärke Ez auf der Achse zwischen den beiden Elektroden. Die Magnetfeldstärke Hz auf der Längsachse Z erreicht ein Minimum im Bereich des mittleren Polschuhs PP2, wo auch eine Feldrichtungsumkehr stattfindet. Maxima der magnetischen Feldstärke liegen wieder im Bereich der Elektroden E1 und E2, wo die elektrische Feldstärke Ez auf der Achse Minima aufweist. Die Wirkungsweise bei der Entstehung von ringförmigen Elektronenwolken EC um die Längsachse Z entspricht den Ausführungen zu Fig. 2.

Die Erfindung ist nicht auf die beschriebenen Ausführungsbeispiele beschränkt, sondern im Rahmen fachmännischen Können in mancherlei Weise abwandelbar. Insbesondere sind hinsichtlich der Abmessungen der lonisationskammer, der Größenverhältnisse von Elektroden, Elektrodenabstände, Elektrodendurchmesser eine Vielzahl von auf den Einzelfall abgestimmten Variationen denkbar. Die Abstände der Elektroden und/oder der Polschuhe sowie die Länge der Elektroden in Richtung der Längsachse ist bei mehrstufigen Anordnungen nicht zwangsweise für alle Stufen konstant. Das Potentialgefälle ist zwischen den ersten und der letzten Elektrode nicht notwendigerweise linear, sondern kann im Einzelfall auch einen nichtlinearen Verlauf annehmen. Die Plasmabeschleuniger-Anordnung ist nicht auf den beschriebenen bevorzugten Anwendungsfall eines Ionentriebwerks für einen Raumflugkörper beschränkt, sondern auch zur berührungslosen Materialbearbeitung unter Einsatz hoher Leistungsdichten wie beispielsweise beim Schweißen, Löten, Schneiden oder dgl. auch von hochschmelzenden Metallen vorteilhaft einsetzbar.

## Patentansprüche

1. Plasmabeschleuniger-Anordnung mit einer Ionisationskammer (IK) um eine Längsachse (Z), mit einer Elektrodenanordnung zur Erzeugung eines elektrischen Potentialgefälles für positiv geladene Treibstoffionen über eine Beschleunigungsstrecke entlang der Längsachse, mit Mitteln zur Einleitung eines gebündelten Elektronenstrahls (EB) entlang der Längsachse in die Ionisationskammer und mit einem magnetischen Strahlführungssystem zur Führung des Elektronenstrahls entlang der Längsachse, **dadurch gekennzeichnet, daß** das magnetische Strahlführungssystem entlang der Längsachse eine oder mehrere Richtungsumkehrungen des Magnetfelds aufweist.

2. Anordnung nach Anspruch 1, **dadurch gekennzeichnet, daß** das Strahlführungssystem eine Permanentmagnetanordnung (PM) enthält.

3. Anordnung nach Anspruch 1 oder 2, **dadurch gekennzeichnet, daß** die Elektrodenanordnung über die Beschleunigungsstrecke eine oder mehrere Zwischenelektroden (E1, E2, ...) entsprechend einer Unterteilung des Potentialgefälles in mehrere Stufen aufweist.

4. Anordnung nach Anspruch 3, **dadurch gekennzeichnet, daß** die Zwischenelektroden an der seitlichen Begrenzung der Ionisationskammer angeordnet sind.

5. Anordnung nach Anspruch 3 oder 4, **dadurch gekennzeichnet, daß** die Länge der Zwischenelektroden in Richtung der Längsachse mindestens 30%, vorzugsweise mindestens 80% des Abstands zur jeweils nächsten Elektrode beträgt.

6. Anordnung nach einem der Ansprüche 3 bis 5, **dadurch gekennzeichnet, daß** der Durchmesser einer Zwischenelektrode weniger als 300%, insbesondere weniger als 100% der Elektrodenlänge in Richtung der Längsachse beträgt.

7. Anordnung nach einem der Ansprüche 1 bis 6, **dadurch gekennzeichnet, daß** Pole (PP) des magnetischen Strahlführungssystems und Elektroden (E1, E2, ...) der Elektrodenanordnung in Richtung der Längsachse abwechselnd aufeinanderfolgen.

8. Anordnung nach einem der Ansprüche 1 bis 7, **dadurch gekennzeichnet, daß** elektrische und magnetische Felder in einem überwiegenden Teil, insbesondere mehr als 90% des Volumens der Ionisationskammer gekreuzt verlaufen.

9. Anordnung nach Anspruch 8, **dadurch gekennzeichnet, daß** in mehr als 60% des Volumens der Ionisationskammer der zwischen elektrischer und magnetischer Feldrichtung eingeschlossene Winkel zwischen 45° und 135° liegt.

10. Anordnung nach einem der Ansprüche 1 bis 9, **dadurch gekennzeichnet, daß** die Spannung einer Kathode (K) zur Erzeugung des gebündelten Elektronenstrahls negativ gegen die Elektrode (E5) der Elektrodenanordnung am Ausgang (KA) der lonisationskammer ist.

11. Anordnung nach einem der Ansprüche 1 bis 10, **dadurch gekennzeichnet, daß** in dem am Ende der Beschleunigungsstrecke austretenden Plasmastrahl (PB) die mittlere Geschwindigkeit der Elektronen annähernd gleich der mittleren Geschwindigkeit der positiv geladenen Ionen ist.

12. Anordnung nach Anspruch 11, **dadurch gekennzeichnet, daß** sich die mittleren Geschwindigkeiten von Elektronen und Ionen um maximal den Faktor 10 unterscheiden.

13. Anordnung nach einem der Ansprüche 1 bis 12, **dadurch gekennzeichnet, daß** die Beschleunigungsstrecke für Ionen zur Seite des Eintritts des Elektronenstrahls durch eine Ionenbarriere abgeschlossen ist.

14. Anordnung nach einem der Ansprüche 1 bis 13, **dadurch gekennzeichnet, daß** eine Elektrode (E0) am Beginn der Beschleunigungsstrecke für Ionen als eine Blendenelektrode mit einer zentralen Öffnung für den Elektronenstrahl, deren Durchmesser kleiner ist als der Durchmesser der Ionisationskammer, ausgeführt ist.

15. Anordnung nach einem der Ansprüche 1 bis 14, **dadurch gekennzeichnet, daß** neutraler gasförmiger Treibstoff (TG) der Ionisationskammer (IK) seitlich zugeführt ist.

16. Anordnung nach Anspruch 15, **dadurch gekennzeichnet, daß** die Treibstoffzufuhr in einem Bereich erfolgt, der zwischen 10% und 40% des Längenverlaufs der lonisationskammer von der Seite des Eintritts des Elektronenstrahls beabstandet ist.

17. Anordnung nach einem der Ansprüche 1 bis 16, **dadurch gekennzeichnet, daß** die Länge der lonisationskammer größer als deren Durchmesser, insbesondere größer als das 3-fache des Durchmessers ist.

18. Anordnung nach einem der Ansprüche 1 bis 17, **dadurch gekennzeichnet, daß** die Beschleunigungsstrecke und die Ionisationskammer im wesentlichen identisch sind.

## Claims

1. Plasma accelerator arrangement having an ionization chamber (IK) around a longitudinal axis (Z), having an electrode arrangement for production of an electrical potential drop for positively charged fuel ions across an acceleration path along the longitudinal axis, having means for introduction of a focused electron beam (EB) along the longitudinal axis into the ionization chamber, and having a magnetic beam guidance system for guidance of the electron beam along the longitudinal axis, **characterized in that** the magnetic beam guidance system has one or more direction reversals of the magnetic field along the longitudinal axis.

2. Arrangement according to Claim 1, **characterized in that** the beam guidance system contains a permanent magnetic arrangement (PM).

3. Arrangement according to Claim 1 or 2, **characterized in that** the electrode arrangement has one or more intermediate electrodes (E1, E2, ...) over the acceleration path, corresponding to the potential drop being subdivided into a plurality of steps.

4. Arrangement according to Claim 3, **characterized in that** the intermediate electrodes are arranged at the lateral boundary of the ionization chamber.

5. Arrangement according to Claim 3 or 4, **characterized in that** the length of the intermediate electrodes in the direction of the longitudinal axis is at least 30% and preferably at least 80% of the distance to the respective next electrode.

6. Arrangement according to one of Claims 3 to 5, **characterized in that** the diameter of an intermediate electrode is less than 300%, and in particular less than 100%, of the electrode length in the direction of the longitudinal axis.

7. Arrangement according to one of Claims 1 to 6, **characterized in that** poles (PP) of the magnetic beam guidance system and electrodes (E1, E2, ...) of the electrode arrangement follow one another alternately in the direction of the longitudinal axis.

8. Arrangement according to one of Claims 1 to 7, **characterized in that** electrical and magnetic fields run crossed over in the majority, in particular in more than 90% of the volume of the ionization chamber.

9. Arrangement according to Claim 8, **characterized in that**, in more than 60% of the volume of the ionization chamber, the angle which is included between the electrical field direction and the magnetic field direction is between 45° and 135°.

10. Arrangement according to one of Claims 1 to 9, **characterized in that** the voltage of a cathode (K) for production of the focused electron beam is negative with respect to the electrode (E5) in the electrode arrangement at the output (KA) of the ionization chamber.

11. Arrangement according to one of Claims 1 to 10, **characterized in that** the mean velocity of the electrons in the plasma beam (PB) which emerges at the end of the acceleration path is approximately equal to the mean velocity of the positively charged ions.

12. Arrangement according to Claim 11, **characterized in that** the mean velocities of electrons and ions differ at most by a factor of 10.

13. Arrangement according to one of Claims 1 to 12, **characterized in that** the acceleration path for ions is closed by an ion barrier at the side of the inlet for the electron beam.

14. Arrangement according to one of Claims 1 to 13, **characterized in that** an electrode (E0) at the start of the acceleration path for ions is in the form of an aperture electrode with a central opening for the electron beam, whose diameter is less than the diameter of the ionization chamber.

15. Arrangement according to one of Claims 1 to 14, **characterized in that** neutral gaseous fuel (TG) is supplied to the ionization chamber (IK) at the side.

16. Arrangement according to Claim 15, **characterized in that** the fuel is supplied in an area which is at a distance of between 10% and 40% of the length profile of the ionization chamber from the side of the inlet for the electron beam.

17. Arrangement according to one of Claims 1 to 16, **characterized in that** the length of the ionization chamber is greater than its diameter, in particular greater than three times the diameter.

18. Arrangement according to one of Claims 1 to 17, **characterized in that** the acceleration path and the ionization chamber are essentially identical.

## Revendications

1. Dispositif accélérateur à plasma comportant une chambre d'ionisation (IK) autour d'un axe longitudinal (Z), un système d'électrodes pour générer une différence de potentiel électrique pour des ions de propergol à charge positive sur une trajectoire d'accélération le long de l'axe longitudinal, des moyens d'introduction d'un rayon électronique en faisceau (EB) le long de l'axe longitudinal dans la chambre d'ionisation et un système magnétique de guidage de rayon pour guider le rayon électronique le long de l'axe longitudinal, **caractérisé en ce que** le système magnétique de guidage de rayon présente le long de l'axe longitudinal une ou plusieurs inversions de sens du champ magnétique.

2. Dispositif selon la revendication 1, **caractérisé en ce que** le système de guidage de rayon comporte un système d'aimant permanent (PM).

3. Dispositif selon la revendication 1 ou 2, **caractérisé en ce que** le système d'électrodes comporte sur la trajectoire d'accélération une ou plusieurs électrodes intermédiaires (E1, E2, ...) en fonction d'une division de la différence de potentiel en plusieurs degrés.

4. Dispositif selon la revendication 3, **caractérisé en ce que** les électrodes intermédiaires sont disposées sur la limite latérale de la chambre d'ionisation.

5. Dispositif selon la revendication 3 ou 4, **caractérisé en ce que** la longueur des électrodes intermédiaires en direction de l'axe longitudinal s'élève à au moins 30 %, de préférence au moins 80 % de la distance par rapport à l'électrode respective suivante.

6. Dispositif selon l'une quelconque des revendications 3 à 5, **caractérisé en ce que** le diamètre d'une électrode intermédiaire s'élève à moins de 300 %, notamment moins de 100 % de la longueur de l'électrode en direction de l'axe longitudinal.

7. Dispositif selon l'une quelconque des revendications 1 à 6, **caractérisé en ce que** les pôles (PP) du système magnétique de guidage de rayon et les électrodes (E1, E2, ...) du système d'électrodes se succèdent alternativement en direction de l'axe longitudinal.

8. Dispositif selon l'une quelconque des revendications 1 à 7, **caractérisé en ce que** les champs électrique et magnétique s'étendent en majeure partie en croix, notamment pour plus de 90 % du volume de la chambre d'ionisation.

9. Dispositif selon la revendication 8, **caractérisé en ce que**, dans plus de 60 % du volume de la chambre d'ionisation, l'angle circonscrit entre la direction de champ électrique et magnétique va de 45° à 135°.

10. Dispositif selon l'une quelconque des revendications 1 à 9, **caractérisé en ce que** la tension d'une cathode (K) permettant de générer le rayon électronique en faisceau est négative à l'encontre de l'électrode (E5) du système d'électrodes à la sortie (KA) de la chambre d'ionisation.

11. Dispositif selon l'une quelconque des revendications 1 à 10, **caractérisé en ce que**, dans le rayon plasma (PB) sortant à l'extrémité de la trajectoire d'accélération, la vitesse moyenne des électrons est approximativement égale à la vitesse moyenne des ions à charge positive.

12. Dispositif selon la revendication 11, **caractérisé en ce que** les vitesses moyennes des électrons et des ions se différencient au maximum à raison du facteur 10.

13. Dispositif selon l'une quelconque des revendications 1 à 12, **caractérisé en ce que** la trajectoire d'accélération pour les ions se termine du côté de l'entrée du rayon électronique par une barrière à ions.

14. Dispositif selon l'une quelconque des revendications 1 à 13, **caractérisé en ce qu'**une électrode (EO) est réalisée, au début de la trajectoire d'accélération pour les ions, sous forme d'une électrode écran présentant pour le rayon électronique une ouverture centrale dont le diamètre est plus petit que le diamètre de la chambre d'ionisation.

15. Dispositif selon l'une quelconque des revendications 1 à 14, **caractérisé en ce que** du propergol neutre sous forme gazeuse (TG) est acheminé latéralement à la chambre d'ionisation (IK).

16. Dispositif selon la revendication 15, **caractérisé en ce que** l'apport de propergol a lieu dans une zone qui est distante d'environ 10 % à 40 % de l'extension en longueur de la chambre d'ionisation par rapport au côté de l'entrée du rayon électronique.

17. Dispositif selon l'une quelconque des revendications 1 à 16, **caractérisé en ce que** la longueur de la chambre d'ionisation est supérieure à son diamètre, notamment supérieure à 3 fois le diamètre.

18. Dispositif selon l'une quelconque des revendications 1 à 17, **caractérisé en ce que** la trajectoire d'accélération et la chambre d'ionisation sont substantiellement identiques.
